# EUROPEAN PATENT APPLICATION

(11) **EP 4 471 119 A1**
(43) Date of publication of application: **04.12.2024**
(21) Application number: 23746848.3
(22) Date of filing: 20.01.2023
(51) Int. Cl.: C12G 3/04

(54) **LOW SWEETNESS ALCOHOLIC BEVERAGE CONTAINING GIN**

(30) Priority: 25.01.2022 JP 2022009555
(71) Applicant: Suntory Holdings Limited, Osaka-shi, Osaka 530-8203 (JP)
(72) Inventor: DOI, Shinji, Kawasaki-shi, Kanagawa 211-0067 (JP); MIURA, Yasushi, Kawasaki-shi, Kanagawa 211-0067 (JP)
(74) Representative: Vossius & Partner Patentanwälte Rechtsanwälte mbB
(86) International application number: PCT/JP2023/001654
(87) International publication number: WO 2023/145635

(57) **Abstract**

An object of the present invention is to provide an alcoholic beverage containing gin and having a degree of sweetness of 2 or less, wherein the difficulty of drinking the beverage is improved, and drinkability is enhanced. In a packaged carbonated alcoholic beverage containing gin and having a degree of sweetness of 2 or less, the pH is regulated to 3.0 or more and less than 5.0, and the acidity in terms of citric acid is regulated to 0.05 g/100 ml or less.

## Description

### TECHNICAL FIELD

The present invention relates to a beverage, more specifically an alcoholic beverage containing gin and having a degree of sweetness of 2 or less.

### BACKGROUND ART

In recent years, the popularity of alcoholic beverages represented by RTD has been increasing. RTD is an abbreviation for "Ready to Drink," and RTD beverages include alcoholic beverages that can be consumed immediately, such as canned chuhai, canned cocktails, and canned highballs.

Among alcoholic beverage products in the market, including products for RTD beverages, there are alcoholic beverages in which gin is used. Gin is a type of distilled liquor, and many commercially available products have a scent derived from a characteristic ingredient such as juniper berries, and this scent is favored by many consumers. While gin is typically drunk after being diluted with carbonated water, gin is also often drunk as cocktails such as gin tonic in the market, and RTD products of such cocktails also exist.

### SUMMARY OF INVENTION

### TECHNICAL PROBLEM

As described above, cocktails such as gin tonic are often seen in the market as alcoholic beverages in which gin is used. Such cocktails in many cases are strongly sweetened and, therefore, off flavors derived from gin are largely suppressed, but in some cases the flavor and scent specific to gin are not sufficiently felt. Also, there are some consumers' opinions that it is difficult to drink gin-containing strongly sweetened cocktails, especially during meals or with meals.

The present inventors found during the course of developing a highly palatable alcoholic beverage from which the specific flavor and scent of gin is sufficiently felt, that lowering the degree of sweetness of the beverage enables the specific flavor and scent of gin to be more likely felt, however, it is problematic in that drinkability is impaired to an undesirable extent when the degree of sweetness is 2 or less.

Accordingly, an object of the present invention is to provide an alcoholic beverage containing gin and having a degree of sweetness of 2 or less, wherein the difficulty of drinking the beverage is improved, and drinkability is enhanced.

### SOLUTION TO PROBLEM

As a result of conducting diligent research to find a means to solve the above problem, the present inventors found that it is effective to regulate the pH and acidity of the beverage to specific ranges. It was also found that a more favorable effect can be obtained by adding a predetermined amount of a polysaccharide. That is to say, the present invention relates to, but is not limited to, the following:
(1) A gin-containing packaged alcoholic beverage having:
   a degree of sweetness of 2 or less,
   a pH of 3.0 or more and less than 5.0, and
   an acidity in terms of citric acid of 0.05 g/100 ml or less.
(2) The beverage according to (1), having an alcohol content of 1 to 16 v/v%.
(3) The beverage according to (1) or (2), comprising carbon dioxide gas.
(4) The beverage according to any one of (1) to (3), comprising a polysaccharide.
(5) The beverage according to (4), having a polysaccharide content of 2.5 wt% or less.
(6) The beverage according to (4) or (5), wherein the polysaccharide is at least one selected from the group consisting of dextrin, polydextrose, and indigestible glucan.
(7) The beverage according to (6), wherein the polysaccharide is dextrin.

### ADVANTAGEOUS EFFECTS OF INVENTION

The present invention can provide an alcoholic beverage containing gin and having a degree of sweetness of 2 or less, wherein the difficulty of drinking the beverage is improved, and drinkability is enhanced.

### DESCRIPTION OF EMBODIMENTS

The alcoholic beverage of the present invention will now be described below. Note that, unless otherwise specified, "ppm", "ppb", and "wt%" as used herein mean weight/volume (w/v) ppm, ppb, and wt%, respectively.

One embodiment of the present invention is a gin-containing packaged alcoholic beverage having a degree of sweetness of 2 or less, a pH of 3.0 or more and less than 5.0, and an acidity in terms of citric acid of 0.05 g/100 ml or less. By adopting such a configuration, the difficulty of drinking the beverage is improved, and drinkability can be enhanced, in an alcoholic beverage containing gin and having a degree of sweetness of 2 or less. Here, "improving the difficulty of drinking" as used herein means improving the dry and solid aftertaste so as to be a rounded aftertaste with a mellowness of flavor. Also, "drinkability" as used herein means the properties of a beverage that make the beverage easy to drink and make people desire to drink as much as they want.

### (Gin)

The beverage of the present invention contains gin. Gin is a type of distilled liquor that is made from a fermented liquid of grain such as barley, rye, or potato, and is flavored with juniper berries (a fruit of common juniper). In the present invention, gin that is produced by oneself using a method known per-se may be used, or a product commercially available as an ingredient of a liquor may be used. In the present invention, a commercially available product is suitably used. In the present invention, a single type of gin may be solely used, or two or more types of gin may be used in combination.

In the present invention, the gin content of the beverage is not particularly limited, and can be suitably set according to various purposes. The gin content of the beverage of the present invention is expressed as the amount (v/v%) of gin-derived alcohol in the beverage. For example, when gin having an alcohol content (alcohol strength) of 40 v/v% is contained in an amount of 10 v/v% in a beverage, the gin content of the beverage is expressed as 4 v/v%, which is the amount of gin-derived alcohol in the beverage. The gin content of the beverage of the present invention is not particularly limited, and is, for example, 0.01 v/v% or more, preferably 0.1 v/v% or more, and more preferably 0.5 v/v% or more. The upper limit of the gin content is also not particularly limited, and the gin content of the beverage of the present invention is, for example, 15 v/v% or less, preferably 10 v/v% or less, and more preferably 7 v/v% or less. The gin content in the beverage of the present invention is not particularly limited, and is, for example, 0.01 to 15 v/v%, preferably 0.1 to 10 v/v%, more preferably 0.5 to 7 v/v%. When the beverage of the present invention contains two or more types of gin, the content refers to the total gin content.

### (Degree of sweetness)

The beverage of the present invention has a degree of sweetness of 2 or less. Due to the degree of sweetness being 2 or less, the flavor and scent specific to gin in the beverage tends to be more likely felt sufficiently. The degree of sweetness of the beverage of the present invention is preferably 1 or less, more preferably 0.5 or less, even more preferably 0.1 or less, and most preferably 0 (i.e., no sweetener used).

The degree of sweetness herein is a measure of the sweetness of a beverage, with "1" being the sweetness of a beverage containing 1 g of sucrose per 100 g of the beverage. The degree of sweetness of the beverage is determined by converting the content of each sweetening component into a sucrose equivalent amount based on the relative strength of sweetness of the sweetening component relative to 1 degree of sweetness of sucrose, and then summing the sucrose sweetness equivalent amounts of all sweetening components (also including sweetening components derived from fruit juice, extracts, etc.) contained in the beverage. The relative strengths of sweetness of various representative sweetening components relative to degree 1 of the sweetness of sucrose are shown in the table below. For sweetening components not listed in the table below, the degree of sweetness provided by the manufacturer or distributor of such a sweetening component can be used, or the degree of sweetness can be determined by sensory evaluations.

**[Table 1]**

| Sweetening component | Degree of sweetness |
|---|---|
| Sucrose | 1 |
| Glucose | 0.6 |
| Fructose | 1.2 |
| Isomerized sugar (Fructose 55%) | 1 |
| Lactose | 0.15 |
| Trehalose | 0.4 |
| D-Psicose | 0.7 |
| Maltose | 0.4 |
| Sorbitol | 0.6 |
| Mannitol | 0.6 |
| Maltitol | 0.8 |
| Xylitol | 0.6 |
| Reduced palatinose | 0.45 |
| Erythritol | 0.8 |
| Lactitol | 0.8 |
| Hydrogenated starch hydrolysate | 0.1 |
| Stevia | 100 |
| Glycyrrhizin | 50 |
| Thaumatin | 2000 |
| Saccharin | 200 |
| Aspartame | 100 |
| Acesulfame potassium | 200 |
| Sucralose | 600 |
| Alitame | 2000 |
| Sodium cyclohexylsulfamate | 30 |
| Dultin | 200 |
| Neotame | 1000 |
| Neohesperidin | 1000 |
| Monellin | 25000 |
| Lysozyme | 20 |
| Maltooligosaccharide | 0.45 |

The degree of sweetness of the beverage can be regulated using a sweetening component. The sweetening component may be directly added to the beverage, or an ingredient containing the sweetening component, such as fruit juice or an extract, may be added. Not only one but also two or more sweetening components may be added. Preferable sweetening components are fructose, isomerized sugar, glucose, sucrose, lactose, oligosaccharide (such as maltooligosaccharide), and sugar alcohols (such as erythritol and xylitol), and particularly preferable sweetening components are fructose and sucrose. The beverage of the present invention preferably does not contain high-intensity sweeteners (such as acesulfame potassium and sucralose) from the viewpoint of keeping the degree of sweetness low.

### (pH)

The beverage of the present invention has a pH of 3.0 or more and less than 5.0. By regulating the pH of the beverage to the above range, the difficulty of drinking the gin-containing beverage is effectively improved, and drinkability can be enhanced. Even if the difficulty of drinking the beverage and drinkability are improved when the pH is less than 3.0, the flavor tends to be undesirable for a gin-containing beverage from the viewpoint of acidity and the like. While the pH of the beverage of the present invention is not particularly limited as long as it is within the above range, the lower limit of the pH is preferably 3.2 or more and more preferably 3.4 or more, and the upper limit of the pH is preferably 4.0 or less, more preferably 3.8 or less, and even more preferably 3.6 or less.

In the present invention, the pH of the beverage means the pH measured in the state of not containing carbon dioxide gas. Accordingly, the pH can be measured, for example, after the steps of degassing and shaking the beverage.

To regulate the pH, pH regulators can be used, such as citric acid, malic acid, phosphoric acid, lactic acid, tartaric acid, succinic acid, gluconic acid, phytic acid, acetic acid, fumaric acid, baking soda, sodium hydrogen carbonate, sodium citrate, potassium citrate, and potassium carbonate. One of these pH regulators can be used singly, or two or more can be used in combination.

### (Acidity)

The beverage of the present invention has an acidity in terms of citric acid of 0.05 g/100 ml or less. By regulating the acidity of the beverage to the above range, the difficulty of drinking the gin-containing beverage is effectively improved, and drinkability can be enhanced. While the acidity (in terms of citric acid) of the beverage of the present invention is not particularly limited as long as it is within the above range, the lower limit of the acidity is, for example, 0.0005 g/100 ml or more, preferably 0.001 g/100 ml or more, and even more preferably 0.002 g/100 ml or more. The acidity (in terms of citric acid) of the beverage of the present invention is preferably 0.002 to 0.05 g/100 ml.

"Acidity" as used herein is a value that is a measure of acid content in the state of not containing carbon dioxide gas, and can be determined by calculation from the amount of alkali required for neutralization (pH 7.0) when neutralizing a specific amount of a beverage (a sample) in the state of not containing carbon dioxide gas by adding alkali such as sodium hydroxide. An automatic titrator (such as Mettler Toledo DL50) can be used to measure acidity. In the present invention, a value converted to the amount of citric acid (determined by calculation from the neutralization amount, assuming that the entirety of acid contained in the beverage is citric acid) is used for acidity.

To regulate acidity, usable are organic acids such as citric acid, malic acid, phosphoric acid, lactic acid, tartaric acid, succinic acid, gluconic acid, phytic acid, acetic acid, and fumaric acid as well as inorganic acids.

### (Alcohol content)

The beverage of the present invention contains alcohol. The term "alcohol" as used herein refers to ethanol unless otherwise specified.

The alcohol content of the beverage of the present invention is not particularly limited, and is, for example, 1 to 16 v/v%, preferably 3 to 16 v/v%, more preferably 3 to 12 v/v%, and even more preferably 3 to 10 v/v%.

The alcohol content of the beverage of the present invention may be regulated using the above-described gin, or may be regulated using gin and another liquor. That is to say, the beverage of the present invention may contain a liquor other than gin. The liquor other than gin may be, for example, a distilled liquor other than gin, and the distilled liquor is not limited by the ingredient and production method thereof. Examples of the distilled liquor other than gin include spirits (such as vodka, rum, tequila, gin, and aquavit), neutral spirits, liqueurs, shochu, and ingredient alcohols. The distilled liquor other than gin used in the present invention is preferably a neutral spirit.

Herein, the alcohol content of the beverage can be measured by any known method and, for example, can be measured with a vibrating densimeter. Specifically, the beverage is, if necessary, stripped of carbon dioxide gas by filtration or sonication to prepare a sample, then the sample is subjected to direct-fire distillation, and the density at 15°C of the resulting distillate is measured and converted to an alcohol content in reference to "Table 2 Conversion Table Between Alcohol Content, Density (15°C), and Specific Gravity (15/15°C)" appended to Official Analysis Method of the National Tax Agency of Japan (National Tax Agency Directive No. 6 in 2007, revised on June 22, 2007). In the present invention, the alcohol content is synonymous with alcohol strength (v/v%).

### (Carbon dioxide gas)

The beverage of the present invention may contain carbon dioxide gas. Carbon dioxide gas can be added to the beverage using a method commonly known to those skilled in the art, and as non-limiting examples of such methods, carbon dioxide may be dissolved in the beverage under pressure, carbon dioxide and the beverage may be mixed in piping using a mixer such as a carbonator of Tuchenhagen GmbH, the beverage may be sprayed into a tank filled with carbon dioxide to cause the beverage to absorb carbon dioxide, or the beverage may be mixed with carbonated water. The pressure of carbon dioxide gas is regulated by suitably using such means.

When the beverage of the present invention contains carbon dioxide gas, the carbon dioxide gas pressure is not particularly limited, and is preferably 0.7 to 4.5 kgf/cm², and more preferably 0.8 to 2.8 kgf/cm². In the present invention, the carbon dioxide gas pressure can be measured using a gas volume analyzer GVA-500A manufactured by Kyoto Electronics Manufacturing Co., Ltd. For example, the temperature of a sample is regulated to 20°C, air in a package in the gas volume analyzer is released (snifted), the package is shaken, and then the carbon dioxide gas pressure is measured. Herein, unless specified otherwise, the carbon dioxide gas pressure means a carbon dioxide gas pressure at 20°C.

### (Polysaccharide)

The beverage of the present invention may contain a polysaccharide. By containing a polysaccharide, the effect of improving the difficulty of drinking the gin-containing alcoholic beverage is increased, and the drinkability of the beverage can be further enhanced. The term "polysaccharide" as used herein means a saccharide in which 10 or more monosaccharides are bonded by glycosidic linkage. That is to say, the "polysaccharide" is a saccharide in which the number of monosaccharides constituting the sugar chain is 10 or more. A preferable polysaccharide is, for example, a chain polysaccharide, i.e., a polysaccharide in which constituent sugars are bonded in a linear and/or branched manner. The constituent sugars are not particularly limited, and include sugars and sugar alcohols, but do not include sugar acids. Examples of the constituent sugars include glucose, sorbitol, fructose, xylose, galactose, and mannose, and, in particular, glucose and sorbitol are preferable. While the majority, e.g., 90% or more, of the number of constituent sugars of preferable polysaccharides may be selected from the above examples of constituent sugars, the remaining minor constituent sugars may be other constituent sugars. The bonding of constituent sugars is typically selected from the group consisting of α-1,2 bond, α-1,3 bond, α-1,4 bond, α-1,6 bond, β-1,2 bond, β-1,3 bond, β-1,4 bond, and β-1,6 bond.

Examples of preferable polysaccharides used in the present invention are starch, β-glucan, indigestible dextrin, polydextrose, dextrin, indigestible glucan, and isomaltodextrin, and preferably the polysaccharide is selected from the group consisting of dextrin, polydextrose, and indigestible glucan. In the present invention, one polysaccharide may be used singly, or two or more may be used in combination. When two or more polysaccharides are used, the polysaccharide content in the beverage of the present invention means the total content of various polysaccharides.

"Dextrin" as used herein means a carbohydrate and an equivalent thereof obtained by chemically or enzymatically reducing the molecular weight of starch such as corn starch or potato starch. An example of a commercially available product thereof is "Sandec #150" (Sanwa Starch Co., Ltd.).

"Polydextrose" as used herein means a water-soluble dietary fiber obtained by polymerizing glucose and sorbitol in the presence of citric acid. An example of a commercially available product thereof is "Litesse" (Danisco Japan Co., Ltd.).

"Indigestible glucan" as used herein means glucan (a glucose polymer) that is indigestible, and the sugar chain thereof may include a monosaccharide other than glucose or an oligosaccharide containing such monosaccharides. Indigestible glucan is novel water-soluble dietary fiber that is recently obtained by thermally polymerizing sugar using activated carbon as a reaction catalyst in place of an acid catalyst. Examples thereof include "Fit Fiber #80" (registered tradename, manufactured by Nihon Shokuhin Kako Co., Ltd.).

The meaning and definition of other polysaccharides are well known to those skilled in the art, and such polysaccharides can be produced by known methods or are commercially available.

In one embodiment, the alcoholic beverage of the present invention contains dextrin. An example of the dextrin content of the beverage of such an embodiment is, but is not particularly limited to, 0.01 to 2.5 wt%. The dextrin content of the beverage of the present invention is preferably 0.05 to 2.0 wt%, more preferably 0.1 to 2.0 wt%, and even more preferably 0.1 to 0.5 wt%.

In one embodiment, the beverage of the present invention contains polydextrose. An example of the polydextrose content of the beverage of the present embodiment is, but is not particularly limited to, 0.01 to 2.5 wt%. The polydextrose content of the beverage of the present invention is preferably 0.05 to 2.0 wt%, more preferably 0.1 to 1.5 wt%, and even more preferably 0.1 to 0.5 wt%.

In one embodiment, the beverage of the present invention contains indigestible glucan. An example of the indigestible glucan content of the beverage of such an embodiment is, but is not particularly limited to, 0.01 to 2.5 wt%. The indigestible glucan content of the beverage of the present invention is preferably 0.05 to 2.0 wt%, more preferably 0.1 to 2.0 wt%, and even more preferably 0.1 to 0.5 wt%.

In another embodiment, the alcoholic beverage of the present invention contains polydextrose and dextrin, polydextrose and indigestible glucan, dextrin and indigestible glucan, or polydextrose, dextrin and indigestible glucan.

The dextrin, polydextrose, and indigestible glucan contents of the beverage may be measured using any method known to those skilled in the art, such as HPLC or LC-MS, and can be measured by, for example, HPLC under the following conditions:
<Analytical conditions for polysaccharide>
Measuring instrument: Shimadzu LC-20AD
Column: ULTRON PS-80N ϕ8.0 mm × 300 mm
Column temperature: 80°C
Detector: Differential refractometer Shimadzu RID-20A
Mobile phase: Water
Injection volume: 20 µL

### (Fruit juice)

The beverage of the present invention may contain fruit juice. Fruit juice may be in any form, such as not-from-concentrate fruit juice obtained by squeezing a fruit and used as-is, or concentrated fruit juice. Clear fruit juice and cloudy fruit juice are also usable, and whole fruit juice obtained by crushing the whole fruit including the outer skin and removing only the coarse solids in particular, such as seeds, fruit puree obtained from a pureed fruit, or fruit juice obtained by crushing or extracting the pulp of a dried fruit are also usable.

The type of fruit juice is not particularly limited, and examples include citrus juice (such as orange juice, satsuma orange juice, grapefruit juice, lemon juice, lime juice, yuzu juice, iyokan juice, Japanese summer orange juice, hassaku juice, ponkan juice, shiikuwasha juice, kabosu juice), apple juice, grape juice, peach juice, tropical fruit juice (such as pineapple juice, guava juice, banana juice, mango juice, acerola juice, lychee juice, papaya juice, and passion fruit juice), and juice of other fruits (such as Japanese apricot juice, pear juice, apricot juice, plum juice, berry juice, and kiwi fruit juice), strawberry juice, and melon juice. One of these fruit juices may be used singly, or two or more may be used in combination.

The fruit juice content of the beverage of the present invention is not particularly limited, and fruit juice can be contained within a range such that the total degree of sweetness derived from sugar contained in fruit juice and other ingredients does not exceed 2.

The "proportion of fruit juice" in the beverage is calculated by the following conversion formula using the amount (g) of fruit juice contained in 100 g of the beverage. Also, the concentration ratio is calculated in accordance with JAS standards, and the refractometer readings for sugars such as carbohydrates and honey added to fruit juice are excluded. Proportion of fruit juice (w/w%) = <Amount of fruit juice contained (g)> × <Concentration ratio> / 100 mL / <Specific gravity of beverage> × 100

### (Other components)

In addition, additives that are commonly added to beverages such as flavoring agents, vitamins, pigments, antioxidants, preservatives, flavor enhancers, extracts, and quality stabilizers can be added to the beverage of the present invention as long as the effects of the present invention are not impaired.

### (Beverage)

The type of the alcoholic beverage of the present invention is not particularly limited, and may be, for example, highball, chuhai, cocktail, sour, or the like. The terms "highball" and "chuhai" when used in connection with the beverage of the present invention refer to beverages containing water, a distilled liquor, and carbonic acid. Highball and chuhai may further contain fruit juice. The term "sour" when used in connection with the beverage of the present invention refers to a beverage containing a spirit, sour fruit juice of a citrus fruit or the like, a sweetening component, and carbonic acid. The term "cocktail" when used in connection with the beverage of the present invention refers to an alcoholic beverage made by mixing a base liquor with fruit juice or the like.

The beverage of the present invention is provided in a packaged form. Examples of the packaged form include, but are not limited to, metal packages such as cans, plastic bottles, paper packs, glass bottles, and pouches. For example, a sterilized packaged product can be produced by a method involving filling a package with the beverage of the present invention and then performing heat sterilization such as retort sterilization, or a method involving sterilizing the beverage and filling a package with the beverage.

### (Production method)

The beverage of the present invention can be produced by suitably blending the above-described components. In the production of the beverage of the present invention, the order of blending various components is not particularly limited. The production of the beverage of the present invention may include the step of blending the components and materials set forth above and the step of regulating the contents thereof. Various factors, such as the types of components and the contents thereof in the beverage, in the production of the beverage of the present invention are as described above in connection with the beverage of the present invention, or are obvious therefrom.

The production of the beverage of the present invention may include the step of heat-sterilizing the beverage as necessary and may also include the step of filling a package with the beverage, and through these steps, the packaged beverage can be obtained. When performing heat sterilization, the method therefor is not particularly limited, and it can be performed using a conventional technique such as UHT sterilization or retort sterilization. The temperature of the heat sterilization treatment is not particularly limited, and is, for example, 65 to 130°C and preferably 85 to 120°C. The time of the heat sterilization treatment is not particularly limited, and is, for example, 10 to 40 minutes. Note that the heat sterilization treatment may be performed at a suitable temperature for several seconds, such as 5 to 30 seconds, as long as a sterilization value equivalent to that under the above conditions can be obtained.

### (Related method)

In another aspect of the present invention is a method for enhancing the drinkability of an alcoholic beverage, wherein the alcoholic beverage is a packaged alcoholic beverage containing gin and having a degree of sweetness of 2 or less. The method includes the following steps of:
regulating the pH of the beverage to 3.0 or more and less than 5.0, and
regulating the acidity (in terms of citric acid) of the beverage to 0.05 g/100 ml or less.

The method may further include the step of blending ingredients such that the polysaccharide content of the beverage is 2.5 wt% or less.

The types of components in the beverage, contents thereof, acidity, pH, carbon dioxide pressure, preferable ranges thereof, and methods for regulating them are as described above in connection with the beverage of the present invention, or are obvious therefrom. The timing thereof is also not limited. For example, all of the above steps may be performed simultaneously or may be performed separately, and the order of the steps may be changed. The beverage eventually obtained should satisfy the above requirements.

### (Numerical range)

For clarity, numerical ranges set forth herein include their endpoints, i.e., lower and upper limits.

### EXAMPLES

Below, the present invention will now be specifically described by way of Examples, but the present invention is not limited thereto.

### <Reference Examples>

Beverage samples of gin-containing alcoholic beverages were prepared such that the final concentrations of various components were as shown in the table below. Specifically, beverage samples were prepared by mixing gin with carbonated water. For the beverage samples, ingredient alcohol was added to regulate the alcohol content of the beverages, and high fructose corn syrup was added to regulate the degree of sweetness, as necessary. Gin used as an ingredient was gin product A (Suntory Gin SUI: alcohol strength 40 v/v%) in Reference Examples 1, 2, 5 and 6, gin product B (Beefeater Gin: alcohol strength 40 v/v%) in Reference Example 3, and gin product C (Gordon's London Dry Gin: alcohol strength 43 v/v%) in Reference Example 4. All beverage samples were filled in aluminum cans to be packaged beverages. The gin content was expressed by the amount of gin-derived alcohol in the beverage, and the same applies below.

The resulting beverage samples were subjected to sensory evaluations by a panel of two experts. The items and criteria of the sensory evaluations were as follows.

### (Mellowness of flavor)

1: Mellowness of flavor was not perceived
2: Mellow flavor was not quite perceived
3: Mellowness of flavor was slightly perceived
4: Mellowness of flavor was perceived
5: Mellow flavor was highly perceived

### (Drinkability)

1: Drinkability was poor
2: Drinkability was slightly poor
3: Drinkability was slightly high
4: Drinkability was high
5: Drinkability was very high

The evaluation results were the average of evaluation scores given by each expert panelist. As an evaluation that comprehensively expresses desirability as an alcoholic beverage, overall evaluations were collectively made by all expert panelists according to the following criteria.

### (Overall evaluation)

Poor (cross mark)
Fair (triangle)
Good (circle)
Excellent (double circle)

**[Table 2]**

| | | Reference Example 1 | Reference Example 2 | Reference Example 3 | Reference Example 4 | Reference Example 5 | Reference Example 6 |
|---|---|---|---|---|---|---|---|
| Gin | v/v% | 7 | 0.1 | 7 | 7 | 7 | 7 |
| pH | - | 6 | 6 | 6 | 6 | 6 | 6 |
| Acidity | g/100ml | 0 | | | | | |
| Degree of sweetness | - | 0 | 0 | 0 | 0 | 2 | 3 |
| Alcohol content | v/v% | 7 | | | | | |
| Carbon dioxide gas pressure | kgf/cm² | 2 | | | | | |
| Mellowness of flavor | | 2 | 1 | 1.5 | 1.5 | 2.5 | 4 |
| Drinkability | | 2.5 | 1.5 | 2 | 1.5 | 3 | 3.5 |
| Overall evaluation | | × | × | × | × | Δ | ○ |

The results are as provided above, and in all samples of gin-containing alcoholic beverages having a degree of sweetness of 2 or less, the mellowness of flavor was unlikely felt and it was thus difficult to drink, and perceived drinkability was also poor.

### <Experimental Example 1>

Beverage samples were prepared using gin, citric acid (anhydrous), l-menthol, carbonated water, and ingredient alcohol such that the final concentrations of various components were as shown in the table below. Specifically, beverage samples were prepared by mixing gin product A with carbonated water and adding citric acid (anhydrous) and dextrin (Sandec #150, Sanwa Starch Co., Ltd), and ingredient alcohol was added as necessary to regulate the alcohol content of the beverages. All beverage samples were filled in aluminum cans to be packaged beverages. All beverage samples had a degree of sweetness of 0. The acidity in the table represents the citric acid content of the beverages, and the same applies below.

The resulting beverage samples were subjected to sensory evaluations by a panel of two experts. In the sensory evaluations, the "mellowness of flavor" and "drinkability" were investigated using the same criteria as the Reference Examples. To this Experimental Example, evaluation items of "acidity" and "sharpness of aftertaste" were added, and evaluations were made according to the following criteria.

### (Acidity)

1: Strong acidity
2: Slightly strong acidity
3: Slightly weak acidity
4: Weak acidity
5: Very weak acidity

### (Sharpness of aftertaste)

1: Poor aftertaste sharpness
2: Slightly poor aftertaste sharpness
3: Slightly good aftertaste sharpness
4: Good aftertaste sharpness
5: Very good aftertaste sharpness

The evaluation result was the average of evaluation scores given by each expert panelist. Also, using the same criteria and method as the Reference Examples, overall evaluations that express desirability as an alcoholic beverage were made.

**[Table 3-1]**

| | | Comparative Example 1-1 | Comparative Example 1-2 | Example 1-1 | Example 1-2 | Example 1-3 | Example 1-4 | Example 1-5 | Comparative Example 1-3 |
|---|---|---|---|---|---|---|---|---|---|
| Gin | v/v% | 7 | 0.1 | 7 | 7 | 7 | 7 | 7 | 7 |
| pH | - | 6 | 6 | 4 | 3.7 | 3.5 | 3.2 | 3 | 2.8 |
| Acidity | g/100ml | 0 | 0 | 0.002 | 0.005 | 0.01 | 0.02 | 0.05 | 0.1 |
| Alcohol content | v/v% | 7 | | | | | | | |
| Carbon dioxide gas pressure | kgf/cm² | 2 | | | | | | | |
| Dextrin | wt% | 0 | 0 | 0 | 0 | 0 | 0 | 0 | 0 |
| Mellowness of flavor | | 2 | 1 | 3.5 | 4 | 4 | 4 | 4 | 3 |
| Drinkability | | 2.5 | 1.5 | 4 | 4 | 4.5 | 4.5 | 4 | 3.5 |
| Acidity | | 5 | 5 | 5 | 5 | 4.5 | 4 | 3 | 2 |
| Sharpness of aftertaste | | 2 | 1.5 | 3.5 | 4.5 | 4.5 | 4 | 4 | 3 |
| Overall evaluation | | × | × | ○ | ○ | ○ | ○ | ○ | × |

**[Table 3-2]**

| | | Example 1-6 | Example 1-7 | Example 1-8 | Example 1-9 | Example 1-10 | Example 1-11 | Example 1-12 | Example 1-13 | Example 1-14 |
|---|---|---|---|---|---|---|---|---|---|---|
| Gin | v/v% | 5 | 5 | 3 | 3 | 0.1 | 0.1 | 7 | 7 | 7 |
| pH | - | 4 | 3.5 | 4 | 3.5 | 4 | 3.5 | 4 | 3.5 | 3 |
| Acidity | g/100ml | 0.002 | 0.01 | 0.002 | 0.01 | 0.002 | 0.01 | 0.002 | 0.01 | 0.05 |
| Alcohol content | v/v% | 7 | | | | | | | | |
| Carbon dioxide gas pressure | kgf/cm² | 2 | | | | | | | | |
| Dextrin | wt% | 0 | 0 | 0 | 0 | 0 | 0 | 0.4 | 0.4 | 0.4 |
| Mellowness of flavor | | 3.5 | 3.5 | 3.5 | 3.5 | 2.5 | 3 | 5 | 5 | 4.5 |
| Drinkability | | 3.5 | 4 | 3 | 4 | 2.5 | 2.5 | 5 | 5 | 5 |
| Acidity | | 5 | 4.5 | 5 | 4.5 | 5 | 4.5 | 5 | 5 | 4 |
| Sharpness of aftertaste | | 3.5 | 4 | 3 | 3.5 | 3 | 3 | 4 | 5 | 4.5 |
| Overall evaluation | | ○ | ○ | ○ | ○ | ○ | ○ | 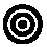 | 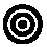 | 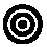 |

The results were as provided above, and it was shown that when the degree of sweetness of a gin-containing alcoholic beverage is low, by regulating the pH and acidity (in terms of citric acid) of the alcoholic beverage to the predetermined ranges, the flavor is perceived as mellow, the difficulty of drinking is improved, and drinkability is also improved. It was also shown that when a polysaccharide is added, both the mellowness of flavor and drinkability are further improved.

### <Experimental Example 2>

The type of gin used as an ingredient was changed, and beverage samples were prepared such that the final concentrations of various components were as shown in the table below. Preparation of beverage samples were carried out in the same manner as Experimental Example 1. Gin used as an ingredient was gin product B or gin product C used in the Reference Examples. All beverage samples were filled in cans to be packaged beverages. All beverage samples had a degree of sweetness of 0.

The resulting beverage samples were subjected to sensory evaluations by a panel of two experts. The sensory evaluations were conducted using the same criteria and methods as Experimental Example 1 to examine the "mellowness of flavor", "drinkability", "acidity" and "sharpness of aftertaste" and overall evaluations.

**[Table 4]**

| | | Gin product B | | Gin product C | |
|---|---|---|---|---|---|
| | | Comparative Example 2-1 | Example 2-1 | Comparative Example 2-2 | Example 2-2 |
| Gin | v/v% | 7 | 7 | 7 | 7 |
| pH | - | 6 | 3.5 | 6 | 3.6 |
| Acidity | g/100ml | 0 | 0.01 | 0 | 0.01 |
| Alcohol content | v/v% | 7 | 7 | 7 | 7 |
| Carbon dioxide gas pressure | kgf/cm² | 2 | 2 | 2 | 2 |
| Dextrin | wt% | 0 | 0.4 | 0 | 0.4 |
| Mellowness of flavor | | 1.5 | 3.5 | 1.5 | 3.5 |
| Drinkability | | 2 | 4 | 1.5 | 3.5 |
| Acidity | | 5 | 5 | 5 | 4.5 |
| Sharpness of aftertaste | | 2 | 4 | 2 | 4 |
| Overall evaluation | | × | 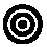 | × | 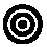 |

The results are as provided above, and even when the type of ingredient gin was changed, the effect of improving the mellowness of flavor and drinkability was obtained due to the adjustment of pH and acidity (in terms of citric acid) and addition of a polysaccharide.

### <Experimental Example 3>

For the beverages obtained by changing the carbon dioxide gas pressure, alcohol content, and polysaccharide content, beverage samples were prepared such that the final concentrations of various components were as shown in the table below. All beverage samples were prepared in the same manner as Experimental Example 1, and filled in cans to be packaged beverages. All beverage samples had a degree of sweetness of 0.

The resulting beverage samples were subjected to sensory evaluations by a panel of two experts. The sensory evaluations were conducted using the same criteria and methods as Experimental Example 1 to examine the "mellowness of flavor", "drinkability", "acidity" and "sharpness of aftertaste" and overall evaluations.

**[Table 5]**

| | | Example 3-1 | Example 3-2 | Example 3-3 | Example 3-4 | Example 3-5 | Example 3-6 |
|---|---|---|---|---|---|---|---|
| Gin | v/v% | 7 | 7 | 1 | 9 | 7 | 7 |
| pH | - | 3.5 | 3.5 | 3.5 | 3.5 | 3.5 | 3.5 |
| Acidity | g/100ml | 0.01 | 0.01 | 0.01 | 0.01 | 0.01 | 0.01 |
| Alcohol content | v/v% | 7 | 7 | 1 | 9 | 7 | 7 |
| Carbon dioxide gas pressure | kgf/cm² | 1 | 3 | 2 | 2 | 2 | 2 |
| Dextrin | wt% | 0.4 | 0.4 | 0.4 | 0.4 | 0.5 | 0.05 |
| Mellowness of flavor | | 5 | 4 | 4.5 | 4 | 5 | 4.5 |
| Drinkability | | 4 | 5 | 4.5 | 4 | 5 | 5 |
| Acidity | | 5 | 4.5 | 4.5 | 5 | 5 | 5 |
| Sharpness of aftertaste | | 4 | 4.5 | 5 | 4.5 | 5 | 4.5 |
| Overall evaluation | | 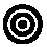 | 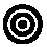 | 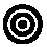 | 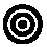 | 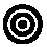 | 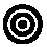 |

The results are as provided above, and in the beverages obtained by changing the carbon dioxide gas pressure, alcohol content, and polysaccharide content as well, the effect of improving the mellowness of flavor and drinkability was obtained.

## Claims

1. A gin-containing packaged alcoholic beverage having:
a degree of sweetness of 2 or less,
a pH of 3.0 or more and less than 5.0, and
an acidity in terms of citric acid of 0.05 g/100 ml or less.

2. The beverage according to claim 1, having an alcohol content of 1 to 16 v/v%.

3. The beverage according to claim 1 or 2, comprising carbon dioxide gas.

4. The beverage according to any one of claims 1 to 3, comprising a polysaccharide.

5. The beverage according to claim 4, having a polysaccharide content of 2.5 wt% or less.

6. The beverage according to claim 4 or 5, wherein the polysaccharide is at least one selected from the group consisting of dextrin, polydextrose, and indigestible glucan.

7. The beverage according to claim 6, wherein the polysaccharide is dextrin.
